# FASCICULE DE BREVET EUROPEEN

(11) **EP 2 855 245 B1**
(45) Date de publication et mention de la délivrance du brevet: **20.04.2016**
(21) Numéro de dépôt: 13728444.4
(22) Date de dépôt: 07.05.2013
(51) Int. Cl.: B62D 35/00

(54) **BECQUET ARRIERE MOBILE POUR VEHICULE AUTOMOBILE**
BEWEGBAREN HECKSPOILER FÜR EIN KRAFTFAHRZEUG
MOVABLE REAR SPOILER FOR A MOTOR VEHICLE

(30) Priorité: 30.05.2012 FR 1254952
(43) Date de publication de la demande: 08.04.2015
(73) Titulaire: Rehau SA, 57340 Morhange (FR)
(72) Inventeur: PENNERATH, Eddy, F-57450 Henriville (FR)
(74) Mandataire: Merckling, Norbert
(86) Numéro de dépôt international: PCT/FR2013/051022
(87) Numéro de publication internationale: WO 2013/178902

(56) Documents cités:
- DE-A1- 10 063 581
- DE-A1-102008 038 033
- GB-A- 2 459 980
- US-A1- 2010 026 044

## Description

La présente invention concerne un becquet arrière mobile pour véhicule automobile. Ce becquet est constitué de deux parties dont une partie supérieure prévue pour se déplacer sur une partie inférieure afin de la prolonger jusqu'à proximité immédiate de la lunette arrière du véhicule automobile lors de son déploiement.

L'aérodynamisme d'une voiture est, avec le moteur et l'électronique, un des aspects techniques le plus importants d'un véhicule car il permet à la fois de réduire sa consommation en carburant et d'améliorer sa tenue de route.

Or, avec la vitesse, non seulement la résistance de l'air s'oppose au déplacement du véhicule, mais la tenue de route d'un véhicule diminue également, tandis que les écoulements d'air sous la voiture tendent à la soulever, accroissant encore les risques de perte de contrôle.

Les appendices aérodynamiques tels que les becquets arrière permettent de « coller » à la route grâce aux appuis aérodynamiques qu'ils génèrent à la manière d'une aile d'avion inversée. Ceux-ci donnent plus d'adhérence en virage à la voiture en augmentant la charge verticale : c'est ce qu'on appelle la déportance, mais font chuter la vitesse de pointe en ligne droite car ils offrent une résistance à l'air et donc à l'avancement de la voiture : c'est ce qu'on appelle la traînée. L'appui progresse en fonction du carré de la vitesse et est fonction de l'angle d'inclinaison du becquet. Cet appui est ainsi tellement efficace qu'à pleine vitesse, une Formule 1 monoplace pourrait rouler la tête en bas sur une piste complètement inversée.

L'effort de déportance, qui contribue aussi au gain de performances et de consommation, est réalisé par le travail sur le sous-bassement du véhicule qui doit être le plus plat possible, mais également par l'ajout sur la carrosserie d'appendices aérodynamiques tel que le becquet arrière.

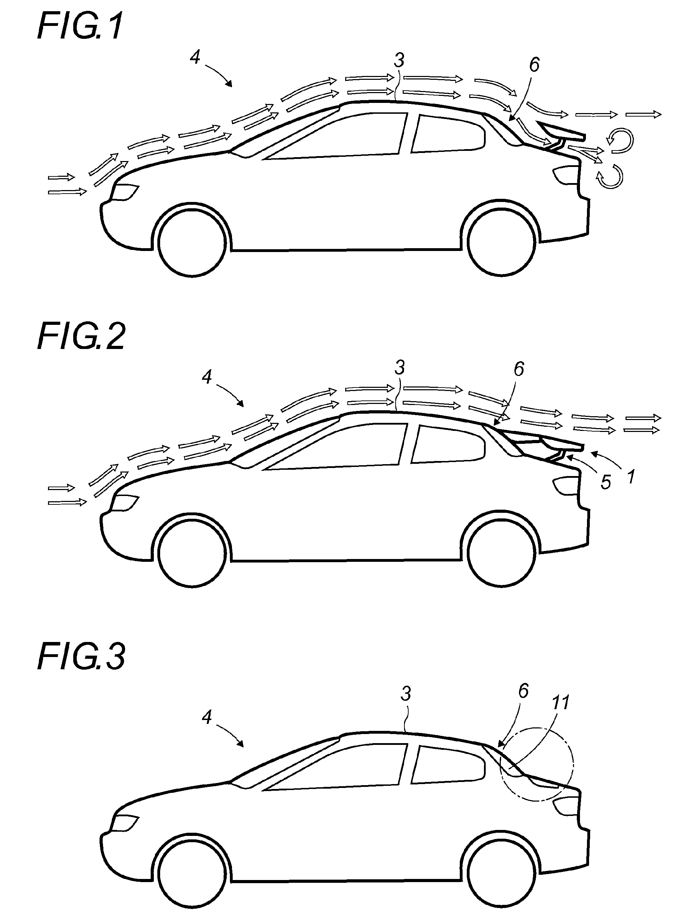

Le becquet arrière est la partie d'une voiture qui lui procure le maximum d'appui, mais il génère aussi des turbulences importantes qui nuisent à l'efficacité générale, et ce, quel que soit l'angle d'inclinaison du becquet. Ces turbulences sont représentées sur la figure 1, qui illustre un becquet arrière classique selon l'art antérieur.

Par le document GB 2 459 980 A au nom de PORSCHE AG, on connaît un aileron arrière escamotable sur un véhicule automobile. Cet aileron arrière escamotable comporte un élément de guidage d'air réglable et au moins un élément d'écoulement, également réglable et réalisé sous la forme d'une protection anti-infiltration de filets fluides. Selon cette invention, l'élément d'écoulement est réalisé séparément de l'élément de guidage d'air et est relié à ce dernier par l'intermédiaire d'une cinématique de réglage.

Habituellement, à vitesse réduite, la forme générale aérodynamique d'une voiture suffit, et c'est pour cette raison qu'actuellement le becquet arrière est habituellement mobile entre une position rétractée de repos et une position déployée d'utilisation.

A faible vitesse, le becquet arrière est dans une position rétractée dans un logement prévu à cet effet, afin d'éviter le phénomène de traînée qui dépend notamment de la forme du véhicule et de son coefficient de pénétration dans l'air (Cx).

A vitesse élevée, le becquet arrière est déployé hors de son logement en position levée afin d'augmenter l'effort de déportance qui agit sur les liaisons au sol du véhicule.

Cependant, la présence du becquet arrière en position levée génère actuellement un flux d'air qui passe en dessous de celui-ci, ce qui provoque des turbulences à l'arrière du véhicule et augmente considérablement le phénomène de traînée.

Le but de l'invention consiste donc à concevoir un becquet arrière mobile qui permette d'éviter ce problème de turbulences à l'arrière du véhicule générées par sa présence, mais sans nuire à l'appui procuré par le becquet lors de son déploiement. Ce type de becquet arrière mobile est habituellement rangé en position escamotée dans un logement prévu dans la carrosserie du véhicule, en arrière de la lunette arrière du véhicule et fermé par la surface supérieure du becquet.

Afin de répondre à ce problème technique, le becquet arrière mobile selon l'invention est en deux parties. Une fois qu'il est sorti en position levée hors de son logement, l'une de ses parties est guidée en translation vers l'avant jusqu'à venir à proximité immédiate de la lunette arrière. Le passage qui existe habituellement entre la lunette arrière et le becquet arrière est alors fermé et aucun flux d'air ne peut passer en dessous de ce dernier, ce qui réduit considérablement le phénomène de traînée résultant de la présence du becquet arrière. La forme aérodynamique du becquet est alors conçue pour que l'air circulant sur sa face supérieure exerce une force de poussée vers le bas afin de contraindre l'arrière de la voiture vers le sol pour une meilleure tenue de route.

Le becquet arrière mobile de l'invention est caractérisé en ce qu'il comprend deux parties superposées, à savoir une partie support inférieure et une partie mobile supérieure, la partie supérieure du becquet étant mobile en déplacement vers l'avant par rapport à la partie inférieure du becquet. Il comprend aussi un dispositif de déploiement prévu pour sortir le becquet de son logement et le mettre en position levée d'utilisation à partir d'une position rétractée dans le logement, et l'escamoter dans une position de repos à l'intérieur de son logement lorsqu'il n'est plus nécessaire.

Le dispositif de déploiement comprend un dispositif d'extraction prévu pour sortir l'ensemble du becquet hors de son logement jusqu'à une hauteur déterminée et un dispositif de déplacement en translation prévu pour déplacer la partie mobile du becquet par rapport à sa partie support, qui reste immobile une fois en position levée.

Lors du déploiement du becquet, le déplacement en translation de la partie mobile du becquet se fait vers l'avant en direction de la lunette arrière du véhicule, tandis que lors du rangement du becquet, le déplacement en translation de la partie mobile du becquet se fait vers l'arrière, par un mouvement de retour en position initiale.

Cette solution est représentée de manière schématique sur la figure 2.

En outre, de par l'augmentation de la surface totale supérieure du becquet arrière du fait de sa prolongation vers la lunette arrière, l'effet de poussée vers le bas par l'air défilant sur sa face supérieure est augmenté, ce qui compense l'effet d'aspiration qui n'existe plus sous le becquet. Le becquet de l'invention, une fois déployé, permet donc de maintenir un effet de charge verticale pour la voiture tout en améliorant considérablement son coefficient de pénétration dans l'air par rapport à un becquet classique.

Cette solution ne dégrade pas l'esthétique générale du véhicule car en position rétractée de repos, seule la partie supérieure du becquet est visible, qui se confond avec la carrosserie.

D'autres caractéristiques et avantages de l'invention apparaîtront à la lecture de la description détaillée qui va suivre, description faite en référence aux dessins annexés, dans lesquels :
- la figure 1 est une vue schématique de profil de l'écoulement de l'air sur un véhicule pourvu d'un becquet classique en position déployée ;
- la figure 2 est une vue schématique de profil de l'écoulement de l'air sur un véhicule pourvu d'un becquet selon l'invention en position déployée d'utilisation ;
- la figure 3 est une vue schématique de profil d'un véhicule pourvu d'un becquet selon l'invention en position rétractée de repos ;
- les figures 4 à 7 sont des vues schématiques en coupe verticale de la zone encerclée sur la figure 3 illustrant les étapes de déploiement d'un becquet selon l'invention ;
- la figure 8 est une vue partielle de dessus de la partie arrière d'un véhicule pourvu d'un becquet selon un mode de réalisation préféré de l'invention en position déployée ;
- les figures 9 à 11 sont des vues en coupe verticale de la partie arrière d'un véhicule pourvu d'un becquet selon l'invention illustrant les étapes de déploiement du becquet selon un mode de réalisation préféré de l'invention ;
- la figure 12 est une vue en perspective d'ensemble du dispositif de déploiement du becquet mobile selon un mode de réalisation préféré de l'invention ;
- la figure 13 est une vue de détail de la zone encerclée sur la figure 12;
- la figure 14 est une vue de détail de dessous d'un becquet selon l'invention en cours de déplacement en translation de sa partie mobile ;
- la figure 15 est une vue d'ensemble de dessous d'un becquet selon l'invention au cours d'un déplacement de translation de sa partie mobile ; et
- la figure 16 est une vue de détail de la zone encerclée sur la figure 15.

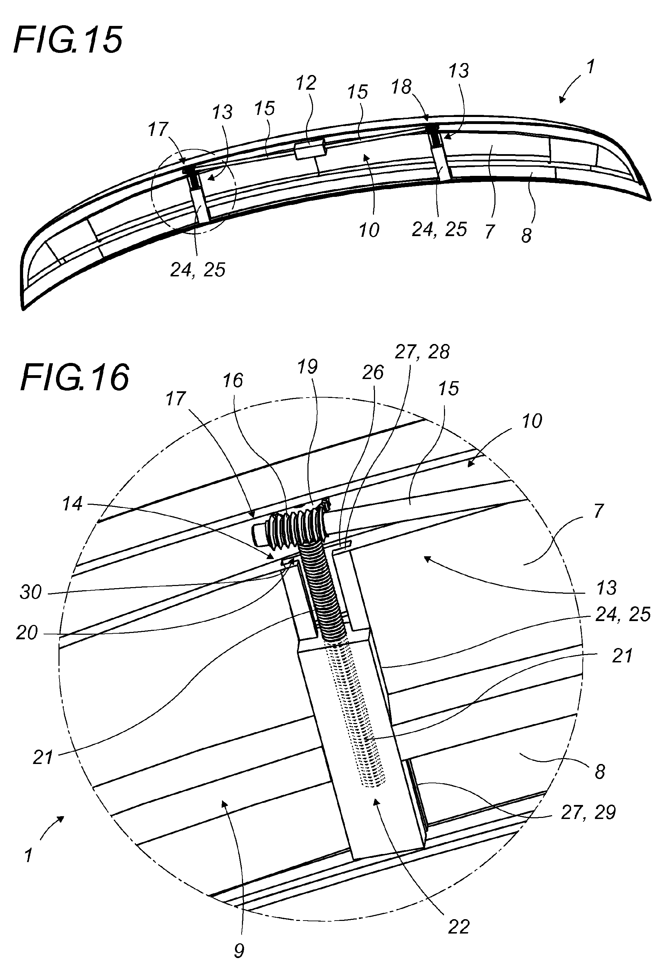

Le becquet arrière mobile selon la présente invention va maintenant être décrit de façon détaillée en référence aux figures 1 à 16.

Le becquet arrière mobile 1 de l'invention est prévu pour être déployé en dehors puis escamoté à l'intérieur d'un logement 2 prévu dans la carrosserie 3 d'un véhicule 4 au moyen d'un dispositif de déploiement 5, ce logement 2 étant situé en arrière de la lunette arrière 6 du véhicule 4, notamment lorsqu'une certaine vitesse est atteinte.

Le becquet 1 comprend deux parties superposées 7, 8, à savoir une partie inférieure 7 et une partie supérieure 8, ainsi qu'un dispositif de déploiement 5.

La partie supérieure 8 du becquet 1 est mobile en déplacement par rapport à la partie inférieure 7 du becquet 1. Pour des raisons de facilité de compréhension nous désignerons par la suite la partie inférieure 7 du becquet 1 en tant que partie support 7 du becquet et la partie supérieure 8 du becquet 1 en tant que partie mobile 8 du becquet 1.

Lorsque l'utilisation du becquet arrière 1 est nécessaire, par exemple à vitesse élevée, le dispositif de déploiement 5 est prévu pour sortir le becquet 1 de son logement 2 et le mettre en position levée d'utilisation à partir d'une position rétractée dans le logement 2 (voir figure 2). Lorsque le becquet 1 de l'invention n'est plus nécessaire, ce même dispositif de déploiement 5 l'escamote dans une position de repos ou à l'intérieur de son logement 2 également désignée en tant que position de rangement.

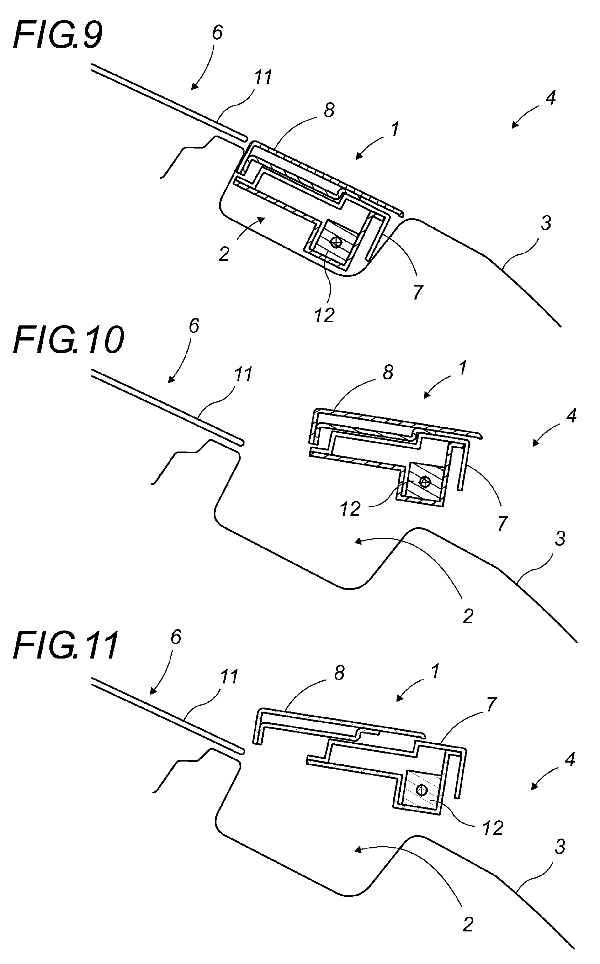

En position de repos (voir figures 3 et 9), le becquet arrière mobile 1 selon la présente invention est en position rétractée dans un logement 2 prévu dans la carrosserie 3 d'un véhicule 4, à l'arrière de la lunette arrière 6. Dans cette position, seule la partie supérieure de la partie mobile 8 du becquet 1 est visible et se confond avec la carrosserie 3 pour une meilleure esthétique.

Le dispositif de déploiement 5 comprend un dispositif d'extraction 9 prévu pour sortir l'ensemble du becquet 1 selon l'invention hors de son logement 2 jusqu'à une hauteur déterminée et un dispositif de déplacement en translation 10 prévu pour déplacer la partie mobile 8 du becquet 1 par rapport à la partie support 7 du becquet 1 qui reste immobile une fois en position levée.

Lors du déploiement du becquet 1, le déplacement en translation de la partie mobile 8 du becquet 1 se fait vers l'avant en direction de la lunette arrière 6 du véhicule 4.

Lors du rangement du becquet 1, le déplacement en translation de la partie mobile 8 du becquet 1 se fait vers l'arrière, par un mouvement de retour en position initiale, par exemple au niveau de la partie support 7 du becquet 1.

Ainsi, lorsque le becquet 1 de l'invention n'est plus nécessaire, le dispositif de déplacement en translation 10 est prévu pour déplacer la partie mobile 8 du becquet vers l'arrière de sorte qu'il retourne en position initiale au niveau de la partie support 7 du becquet 1. Le dispositif d'extraction 9 rétracte alors l'ensemble du becquet 1 de l'invention dans son logement 2.

Le déploiement du becquet 1 de l'invention en position d'utilisation se fait en deux étapes, qui peuvent être successives ou simultanées. Son rangement dans le logement 2 se fait par étapes inverses.

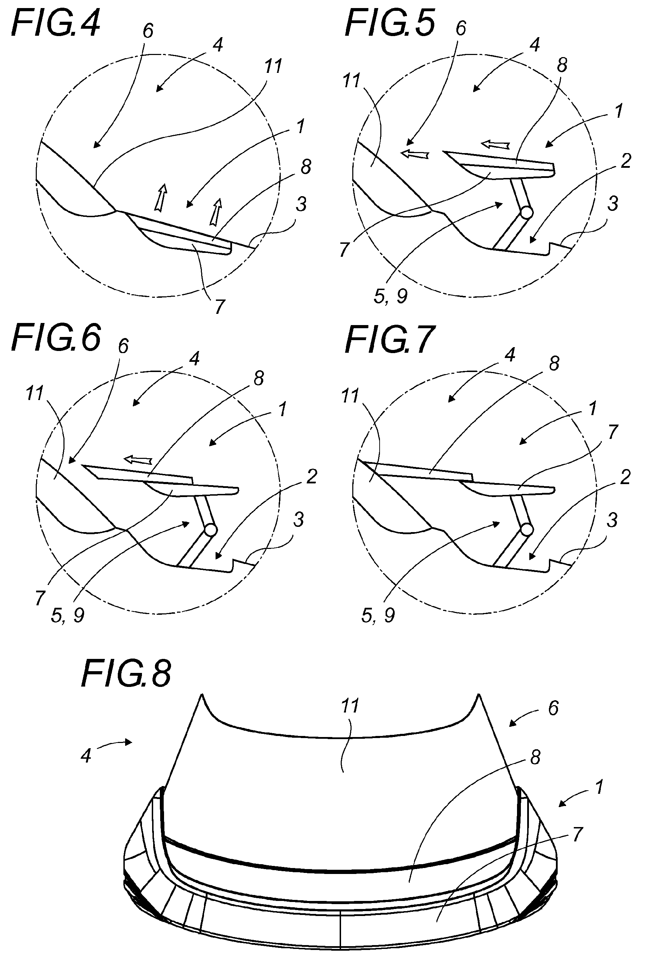

La première étape de déploiement du becquet 1 de l'invention consiste à le soulever et à le faire sortir hors de son logement 2 jusqu'à une hauteur déterminée (figures 4, 5 et 10) grâce au dispositif d'extraction 9.

La seconde étape de déploiement consiste à déplacer la partie mobile 8 du becquet vers l'avant par rapport à la partie support 7 du becquet 1 qui reste immobile une fois en position levée (figure 6). Le dispositif de déplacement en translation 10 déplace alors la partie mobile 8 du becquet 1 vers l'avant jusqu'à ce qu'elle arrive à proximité immédiate de la vitre 11 de la lunette arrière 6 du véhicule 4 (figures 7 et 11).

Par proximité immédiate de la vitre 11, on entend que la partie mobile 8 du becquet 1 arrive presque jusqu'en contact avec la vitre 11 de la lunette arrière 6, laissant un espace entre les deux de l'ordre de quelques millimètres, un ou deux centimètres au maximum, de sorte que le passage d'air entre la partie mobile 8 du becquet et la lunette arrière 6 soit réduit au minimum (voir figure 8).

Le dispositif de déplacement en translation 10 de l'invention comprend un moteur 12 et un moyen de conversion de mouvement 13 qui transforme la rotation du moteur 12 en mouvement de translation pour la partie mobile 8 du becquet 1.

Ce mouvement de translation de la partie mobile 8 du becquet 1 est préférentiellement guidé par des moyens de guidage 14.

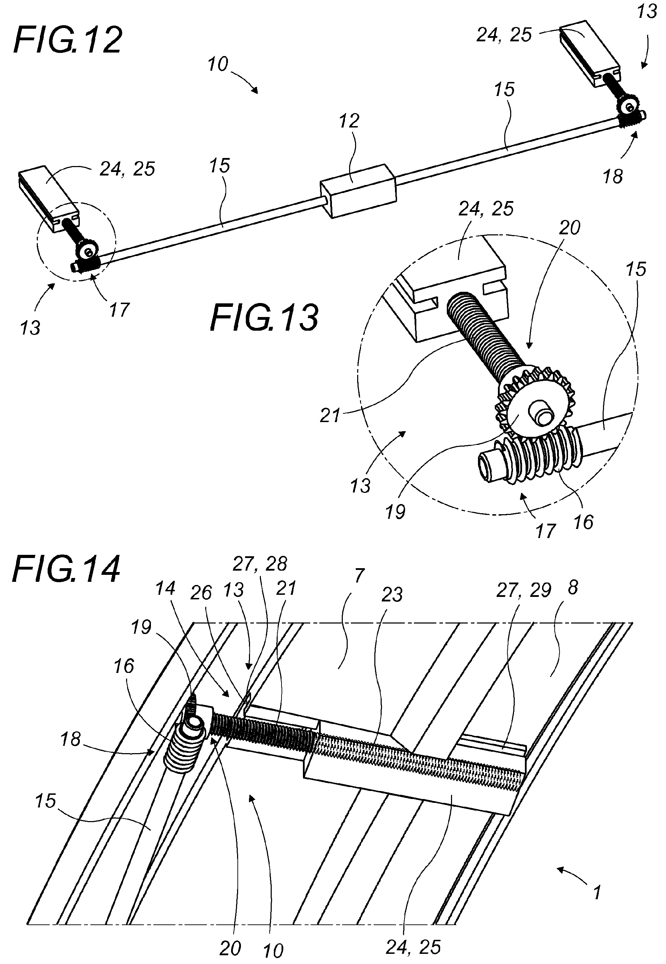

Selon un mode de réalisation préféré de l'invention, tel que représenté sur les figures 12 à 16, le moyen de conversion de mouvement 13 se présente sous la forme d'un axe d'entraînement 15 entraîné en rotation par le moteur 12 du dispositif de déplacement en translation 10, ce moteur 12 étant fixé à la partie support 7 du becquet, de préférence en sous-face de celui-ci.

Cet axe d'entraînement 15 est logé sous la partie support 7 du becquet 1, dans la largeur de celui-ci, à savoir perpendiculairement à l'axe longitudinal du véhicule 4. L'axe d'entraînement 15 présente des filetages 16, par exemple au niveau de ses deux extrémités 17, 18, tandis qu'un engrenage 19 vient en prise avec chacun de ces filetages 16 de manière perpendiculaire, chaque engrenage 19 étant lui-même monté à l'extrémité arrière 20 d'une vis sans fin 21.

Chacune de ces deux vis sans fin 21 est reçue par son extrémité avant 22 de manière coaxiale dans l'alésage fileté 23 d'un moyen de fixation et de guidage 24.

Chacun des moyens de fixation et de guidage 24 peut se présenter sous la forme d'un bloc 25 fixé à la partie mobile 8 du becquet 1, de préférence en sous-face de celui-ci.

Une gorge de guidage 26 peut être prévue en sous-face de la partie support 7 du becquet 1, gorge dans laquelle coulissent chacun des moyens de fixation et de guidage 24.

Ces moyens de fixation et de guidage 24 peuvent également présenter des motifs de guidage 27, par exemple sous la forme de rainures 28, qui coopèrent avec des motifs de guidage 27 complémentaires, par exemple sous la forme de saillies longitudinales 29 prévues en sous-face de la partie support 7 du becquet 1, par exemple dans les flancs latéraux 30 des gorges de guidage 26 de celle-ci.

Nous allons maintenant nous intéresser au fonctionnement du dispositif de déplacement en translation 10 du becquet arrière 1 de l'invention selon le mode de réalisation préféré décrit précédemment.

La rotation du moteur 12 du dispositif de déplacement en translation 10 entraîne l'axe d'entraînement 15 en rotation. Les filetages 16, par exemple présents à chacune des extrémités 17, 18 de l'axe d'entraînement 15, entraînent chacun en rotation un des engrenages 19 prévus en extrémité arrière 20 des vis sans fin 21, ce qui entraîne également en rotation lesdites vis sans fin 21. Puisque cet ensemble moteur - axe d'entraînement - vis sans fin 12, 15, 21 est fixé contre la partie support 7 du becquet 1, la rotation des vis sans fin 21 dans l'alésage fileté 23 des blocs 25 des moyens de fixation et de guidage 24 déplace ce bloc 25 soit en éloignement de la partie support 7 du becquet 1, soit en rapprochement de celui-ci selon le sens de rotation du moteur 12.

Les blocs 25 des moyens de fixation et de guidage 24 étant fixés à la partie mobile 8 du becquet 1, celui-ci est par conséquent déplacé en éloignement de la partie support 7 du becquet 1 ou en rapprochement de celui-ci selon le sens de rotation du moteur 12.

Un même moteur 12 provoque le déplacement simultané des deux blocs 25 des moyens de fixation et de guidage 24, pour que la partie mobile 8 du becquet 1 soit déplacée parallèlement à la partie support 7 du becquet 1. Ce déplacement est en outre guidé dans la gorge de guidage 26 par les motifs de guidage 27, ce qui évite que la partie mobile 8 du becquet 1 ne se déplace de manière non parallèle à la partie support 7 du becquet 1.

On notera de manière générale qu'il est plus avantageux, bien que non obligatoire, qu'un même moteur 12 soit utilisé à la fois pour faire sortir le becquet 1 hors de son logement 2 et pour déplacer la partie mobile 8 du becquet 1 vers l'avant. Aussi, le moteur 12 du dispositif de déplacement en translation 10 de l'invention peut être le même que celui utilisé dans le dispositif d'extraction 9 de l'invention. Ceci permet notamment de diminuer les risques de défaillance du dispositif de déploiement 5 de l'invention et de minimiser le coût de celui-ci. Les étapes de déploiement et de rangement du becquet mobile 1 sont alors effectuées en faisant tourner le moteur 12 dans un sens, puis dans l'autre.

De manière évidente, l'invention ne se limite pas au mode de réalisation préférentiel décrit précédemment et représenté sur les différentes figures, l'homme du métier pouvant y apporter de nombreuses modifications et imaginer d'autres variantes sans sortir ni de la portée, ni du cadre de l'invention.

Par exemple, bien que le mode de réalisation de l'invention comporte des moyens de fixation et de guidage 24 sous la forme de deux blocs 25 notamment pour des raisons de coût et de parallélisme du guidage, on peut envisager des moyens de fixation et de guidage 24 sous la forme d'un seul bloc, de trois blocs ou plus. Il est alors évident pour l'homme du métier d'adapter le dispositif décrit en fonction du nombre de blocs choisi.

## Revendications

1. Becquet arrière mobile (1) pour véhicule automobile (4), prévu pour être sorti en position d'utilisation d'un logement (2), puis escamoté en position de rangement à l'intérieur de ce logement (2) au moyen d'un dispositif de déploiement (5), ce logement (2) étant prévu dans la carrosserie (3) du véhicule (4), en arrière de la lunette arrière (6) du véhicule (4) et étant fermé par la surface supérieure du becquet arrière mobile (1) lorsque celui-ci est en position escamotée de rangement, le becquet arrière mobile (1) étant **caractérisé en ce qu'**il comprend :
• deux parties superposées (7, 8), à savoir une partie support inférieure (7) et une partie mobile supérieure (8), la partie supérieure (8) du becquet (1) étant mobile en déplacement vers l'avant par rapport à la partie inférieure (7) du becquet (1) ; et
• un dispositif de déploiement (5) prévu pour sortir le becquet (1) de son logement (2) et le mettre en position levée d'utilisation à partir d'une position rétractée dans le logement (2), et l'escamoter dans une position de repos à l'intérieur de son logement (2) ;
et **en ce que** :
• le dispositif de déploiement (5) comprend un dispositif d'extraction (9) prévu pour sortir l'ensemble du becquet (1) hors de son logement (2) jusqu'à une hauteur déterminée et un dispositif de déplacement en translation (10) prévu pour déplacer la partie mobile (8) du becquet (1) par rapport à sa partie support (7) ;
• lors du déploiement du becquet (1), le déplacement en translation de la partie mobile (8) du becquet (1) se fait vers l'avant en direction de la lunette arrière (6) du véhicule (4) ;
• lors du rangement du becquet (1), le déplacement en translation de la partie mobile (8) du becquet (1) se fait vers l'arrière, par un mouvement de retour en position initiale.

2. Becquet arrière mobile (1) selon la revendication 1, **caractérisé en ce que**, lors du déploiement du becquet (1), le dispositif d'extraction (9) est prévu pour soulever le becquet (1) et le sortir hors de son logement (2) jusqu'à une hauteur déterminée, et le dispositif de déplacement en translation (10) est prévu pour déplacer la partie mobile (8) du becquet (1) vers l'avant jusqu'à ce qu'elle arrive à proximité immédiate de la vitre (11) de la lunette arrière (6) du véhicule (4), ces deux étapes étant successives ou simultanées, et **en ce que** le rangement du becquet (1) dans le logement (2) se fait par étapes inverses.

3. Becquet arrière mobile (1) selon la revendication 1, **caractérisé en ce que** le dispositif de déplacement en translation (10) comprend un moteur (12) et un moyen de conversion de mouvement (13) qui transforme la rotation du moteur (12) en mouvement de translation pour la partie mobile (8) du becquet (1).

4. Becquet arrière mobile (1) selon la revendication 1, **caractérisé en ce que** le mouvement de translation de la partie mobile (8) du becquet (1) est guidé par des moyens de guidage (14).

5. Becquet arrière mobile (1) selon la revendication 3, **caractérisé en ce que** le moyen de conversion de mouvement (13) est sous la forme d'un axe d'entraînement (15) entraîné en rotation par le moteur (12) du dispositif de déplacement en translation (10).

6. Becquet arrière mobile (1) selon la revendication 3, **caractérisé en ce que** le moteur (12) est fixé en sous-face de la partie support (7) du becquet (1).

7. Becquet arrière mobile (1) selon la revendication 5, **caractérisé en ce que** l'axe d'entraînement (15) est logé sous la partie support (7) du becquet (1), dans la largeur de celui-ci, perpendiculairement à l'axe longitudinal du véhicule (4).

8. Becquet arrière mobile (1) selon la revendication 5, **caractérisé en ce que** l'axe d'entraînement (15) présente des filetages (16), **en ce qu'**un engrenage (19) vient en prise avec chacun de ces filetages (16) de manière perpendiculaire, chaque engrenage (19) étant lui-même monté à l'extrémité arrière (20) d'une vis sans fin (21), et **en ce que** chacune de ces vis sans fin (21) est reçue par son extrémité avant (22) de manière coaxiale dans l'alésage fileté (23) d'un moyen de fixation et de guidage (24).

9. Becquet arrière mobile (1) selon la revendication 8, **caractérisé en ce que** les filetages (16) sont situés au niveau des deux extrémités (17, 18) de l'axe d'entraînement (15).

10. Becquet arrière mobile (1) selon la revendication 8, **caractérisé en ce que** les moyens de fixation et de guidage (24) se présentent chacun sous la forme d'un bloc (25) fixé à la partie mobile (8) du becquet (1).

11. Becquet arrière mobile (1) selon la revendication 10, **caractérisé en ce que** chaque bloc (25) est fixé en sous-face de la partie support (7) du becquet (1).

12. Becquet arrière mobile (1) selon la revendication 1, **caractérisé en ce qu'**une gorge de guidage (26) est prévue en sous-face de la partie support (7) du becquet (1), gorge dans laquelle coulissent chacun des moyens de fixation et de guidage (24).

13. Becquet arrière mobile (1) selon la revendication 8, **caractérisé en ce que** les moyens de fixation et de guidage (24) présentent des motifs de guidage (27) qui coopèrent avec des motifs de guidage (27) complémentaires prévues en sous-face de la partie support (7) du becquet (1).

14. Becquet arrière mobile (1) selon la revendication 13, **caractérisé en ce que** les motifs de guidage (27) complémentaires sont des rainures (28) prévues sur les moyens de fixation et de guidage (24) et des saillies longitudinales (29) prévues en sous-face de la partie support (7) du becquet (1).

15. Becquet arrière mobile (1) selon la revendication 1, **caractérisé en ce que** le dispositif de déplacement en translation (10) et le dispositif d'extraction (9) utilisent un moteur (12) commun.

## Patentansprüche

1. Beweglicher Heckspoiler (1) für Kraftfahrzeug (4), der dazu vorgesehen ist, um aus einem Gehäuse (2) in die Einsatzposition gebracht zu werden und dann mittels einer Entfaltungsvorrichtung (5) wieder in einer Aufbewahrungsposition in diesem Gehäuse (2) versenkt zu werden, wobei dieses Gehäuse (2) in der Karosserie (3) des Fahrzeugs (4) hinter dem Heckfenster (6) des Fahrzeugs (4) angeordnet ist und durch die obere Fläche des beweglichen Heckspoilers (1) geschlossen wird, wenn sich dieser in der versenkten Aufbewahrungsposition befindet, der bewegliche Heckspoiler (1) **dadurch gekennzeichnet ist, dass** er:
• zwei übereinanderliegende Teile (7, 8) und zwar einen unten liegenden Trägerteil (7) und einen beweglichen oberen Teil (8), wobei der obere Teil (8) des Heckspoilers (1) gegenüber dem unteren Teil (7) des Heckspoilers (1) nach vorne bewegt werden kann; und
• eine Entfaltungsvorrichtung (5) umfasst, die dazu vorgesehen ist, um den Heckspoiler (1) aus seinem Gehäuse (2) zu bewegen und ihn aus der im Gehäuse (2) eingeklappten Position in die angehobene Einsatzposition zu bringen und ihn wieder in eine eingeklappte Ruheposition innerhalb seines Gehäuses (2) zu versenken;
und dadurch dass:
• die Entfaltungsvorrichtung (5) eine Auszugvorrichtung (9), die vorgesehen ist, um den gesamten Heckspoiler (1) aus dem Gehäuse (2) bis zu einer festgelegten Höhe auszufahren und eine Verschiebevorrichtung (10), die vorgesehen ist, um den beweglichen Teil (8) des Heckspoilers (1) bezogen auf den Trägerteil (7) zu verschieben, umfasst;
• der bewegliche Teil (8) des Heckspoilers (1) bei der Entfaltung des Heckspoilers (1) nach vorne in Richtung auf das Heckfenster (6) des Kraftfahrzeugs (4) verschoben wird;
• der bewegliche Teil (8) des Heckspoilers (1) beim Einfahren des Heckspoilers (1) nach hinten durch eine Rückwärtsbewegung in die ursprüngliche Position verschoben wird.

2. Beweglicher Heckspoiler (1) gemäß Anspruch 1, **dadurch gekennzeichnet, dass** bei der Entfaltung des Heckspoilers (1) die Auszugvorrichtung (9) dafür vorgesehen ist, um den Heckspoiler (1) anzuheben und ihn aus seinem Gehäuse (2) auf eine festgelegte Höhe zu bringen, und dass die Verschiebevorrichtung (10) vorgesehen ist, um den beweglichen Teil (8) des Heckspoilers (1) nach vorne zu verschieben, bis er sich in unmittelbarer Nähe der Scheibe (11) des Heckfensters (6) des Kraftfahrzeugs (4) befindet, wobei diese beiden Schritten nacheinander oder gleichzeitig erfolgen und **dadurch gekennzeichnet, dass** das Einfahren des Heckspoilers (1) im Gehäuse (2) in umgekehrten Schritten erfolgt.

3. Beweglicher Heckspoiler (1) gemäß Anspruch 1, **dadurch gekennzeichnet, dass** die Verschiebevorrichtung (10) einen Motor (12) sowie eine Vorrichtung zur Bewegungsumwandlung (13) umfasst, die die Rotation des Motors (12) in eine Verschiebebewegung des beweglichen Teils (8) des Heckspoilers (1) transformiert.

4. Beweglicher Heckspoiler (1) gemäß Anspruch 1, **dadurch gekennzeichnet, dass** die Verschiebebewegung des beweglichen Teils (8) des Heckspoilers (1) durch Führungen (14) geführt wird.

5. Beweglicher Heckspoiler (1) gemäß Anspruch 3, **dadurch gekennzeichnet, dass** die Vorrichtung zur Umwandlung der Bewegung (13) die Form einer Antriebsachse (15) hat, die in Rotation durch den Motor (12) der Verschiebevorrichtung (10) angetrieben wird.

6. Beweglicher Heckspoiler (1) gemäß Anspruch 3, **dadurch gekennzeichnet, dass** der Motor (12) auf der Unterseite des Trägerteils (7) des Heckspoilers (1) montiert ist.

7. Beweglicher Heckspoiler (1) gemäß Anspruch 5, **dadurch gekennzeichnet, dass** die Antriebsachse (15) unterhalb des Trägerteils (7) des Heckspoilers (1) in dessen Breite senkrecht zur Längsachse des Kraftfahrzeugs (4) untergebracht ist.

8. Beweglicher Heckspoiler (1) gemäß Anspruch 5, **dadurch gekennzeichnet, dass** die Antriebsachse (15) Gewindegänge (16) aufweist; dadurch dass ein Zahnrad (19) senkrecht in jedes dieser Gewindegänge (16) greift, wobei jedes Zahnrad (19) selbst am hinteren Endstück (20) einer Endlosschnecke (21) montiert ist und dadurch dass jedes dieser Endlosschnecken (21) in seinem vorderen Endstück (22) koaxial in der Gewindebohrung (23) eines Befestigungs- und Führungsmittels (24) aufgenommen wird.

9. Beweglicher Heckspoiler (1) gemäß Anspruch 8, **dadurch gekennzeichnet, dass** diese Gewindegänge (16) in Höhe der beiden Endstücke (17, 18) der Antriebsachse (15) liegen.

10. Beweglicher Heckspoiler (1) gemäß Anspruch 8, **dadurch gekennzeichnet, dass** die Befestigungs- und Führungsmittel (24) jeder die Form eines Blocks (25) haben, der am beweglichen Teil (8) des Heckspoilers (1) befestigt ist.

11. Beweglicher Heckspoiler (1) gemäß Anspruch 10, **dadurch gekennzeichnet, dass** jeder Block auf der Unterseite des Trägerteils (7) des Heckspoilers (1) befestigt ist.

12. Beweglicher Heckspoiler (1) gemäß Anspruch 1, **dadurch gekennzeichnet, dass** eine Führungsnut (26) auf der Unterseite des Trägerteils (7) des Heckspoilers (1) vorgesehen ist, wobei die Befestigungs- und Führungsmittel (24) in dieser Nut gleiten.

13. Beweglicher Heckspoiler (1) gemäß Anspruch 8, **dadurch gekennzeichnet, dass** die Befestigungs- und Führungsmittel (24) Führungsvorrichtungen (27) aufweisen, die mit den komplementären Führungsvorrichtungen auf der Unterseite des Trägerteils (7) des Heckspoilers (1) zusammenwirken.

14. Beweglicher Heckspoiler (1) gemäß Anspruch 13, **dadurch gekennzeichnet, dass** die es sich bei den komplementären Führungsmitteln (27) um Rillen, die auf den Befestigungs- und Führungsmitteln (24) vorgesehen sind, sowie um Vorsprünge in Längsrichtung (29) handelt, die auf der Unterseite des Heckspoilers (1) vorgesehen sind.

15. Beweglicher Heckspoiler (1) gemäß Anspruch 1, **dadurch gekennzeichnet, dass** die Verschiebevorrichtung (10) und die Auszugvorrichtung (9) einen gemeinsamen Motor (12) verwenden.

## Claims

1. Mobile rear spoiler (1) for automobile vehicle (4), designed to be extended in an operating position from a housing (2) then retracted into a stowage position inside this housing (2) by means of a deployment device (5), which housing (2) is included in the bodywork (3) of the vehicle (4) behind the rear window (6) of the vehicle (4) and which is closed by the upper surface of mobile rear spoiler (1) when it is in the retracted stowage position, said mobile rear spoiler (1) being **characterized in that** it includes:
• two superimposed parts (7, 8), that is, a lower support part (7) and an upper mobile part (8), wherein the upper part (8) of spoiler (1) is mobile in its forward movement with respect to lower part (7) of spoiler (1); and
• a deployment device (5) designed to extend the spoiler (1) out of its housing (2) and bring it into the raised operating position from a retracted position in its housing (2), and retract it into a rest position inside its housing (2);
and **in that**:
• the deployment device (5) includes an extraction device (9) designed to extend the spoiler (1) assembly from its housing (2) to reach a determined height, and a translation movement device (10) designed to move the mobile part (8) of spoiler (1) with respect to its support part (7);
• during the deployment of spoiler (1), the translation movement of mobile part (8) of spoiler (1) is in a forward direction toward the rear window (6) of vehicle (4);
• during the stowage of spoiler (1), the translation movement of mobile part (8) of spoiler (1) is towards the rear, by a return movement to initial position.

2. A mobile rear spoiler (1) according to claim 1, **characterized in that**, during the deployment of spoiler (1), extraction device (9) is designed to raise spoiler (1) and extend it from its housing (2) to reach a determined height, and translation movement device (10) is designed to move the mobile part (8) of spoiler (1) forward until it comes right up to glass (11) of rear window (6) of vehicle (4), these two steps being successive or simultaneous, and **in that** the stowage of spoiler (1) in housing (2) is by the same steps in the reverse order.

3. A mobile rear spoiler (1) according to claim 1, **characterized in that** translation movement device (10) includes a motor (12) and a movement conversion means (13) converting the rotation of the motor (12) into a translation movement for mobile part (8) of spoiler (1).

4. A mobile rear spoiler (1) according to claim 1, **characterized in that** the translation movement of mobile part (8) of spoiler (1) is guided by guiding means (14).

5. A mobile rear spoiler (1) according to claim 3, **characterized in that** the movement conversion means (13) is a drive shaft (15) driven in rotation by motor (12) of translation movement device (10).

6. A mobile rear spoiler (1) according to claim 3, **characterized in that** motor (12) is attached to the underside of support part (7) of spoiler (1).

7. A mobile rear spoiler (1) according to claim 5, **characterized in that** drive shaft (15) is housed under the support part (7) of spoiler (1), within its width, perpendicularly with respect to the longitudinal axis of vehicle (4).

8. A mobile rear spoiler (1) according to claim 5, **characterized in that** the drive shaft (15) has threaded sections (16), **in that** a gear (19) meshes with each of these threaded sections (16) perpendicularly, with each gear (19) itself mounted at the rear end (20) of a worm screw (21), and **in that** each of these worm screws (21) is inserted by its front end (22) coaxially in the threaded hole (23) of an attaching and guiding means (24).

9. A mobile rear spoiler (1) according to claim 8, **characterized in that** threaded sections (16) are located at the two ends (17, 18) of the drive shaft (15).

10. A mobile rear spoiler (1) according to claim 8, **characterized in that** the attaching and guiding means (24) are each in the form of a block (25) attached to mobile part (8) of spoiler (1).

11. A mobile rear spoiler (1) according to claim 10, **characterized in that** each block (25) is attached to the underside of support part (7) of spoiler (1).

12. A mobile rear spoiler (1) according to claim 1, **characterized in that** a guiding groove (26) is provided on the underside of support part (7) of spoiler (1), groove in which each attaching and guiding mean (24) slides.

13. A mobile rear spoiler (1) according to claim 8, **characterized in that** the attaching and guiding means (24) include guiding patterns (27) which work together with complementary guiding patterns (27) on the underside of the support part (7) of spoiler (1).

14. A mobile rear spoiler (1) according to claim 13, **characterized in that** the complementary guiding patterns (27) consist of grooves (28) formed in attaching and guiding means (24) and of longitudinal protrusions (29) formed on the underside of support part (7) of spoiler (1).

15. A mobile rear spoiler (1) according to claim 1, **characterized in that** translation movement device (10) and extraction device (9) share the same motor (12).
